# EUROPÄISCHE PATENTANMELDUNG

(11) **EP 0 967 137 A2**
(43) Veröffentlichungstag der Anmeldung: **29.12.1999**
(21) Anmeldenummer: 99109133.1
(22) Anmeldetag: 08.05.1999
(51) Int. Cl.: B62D 25/14, B62D 65/00

(54) **Stirnwand einer Fahrgastzelle in einem Kraftfahrzeug**

(30) Priorität: 22.06.1998 DE 19827749
(71) Anmelder: Volkswagen Aktiengesellschaft, 38436 Wolfsburg (DE)
(72) Erfinder: Lewerenz, Malte, Dipl.-Ing., 38104 Braunschweig (DE)

(57) **Zusammenfassung**

Die Stirnwand (1) einer Fahrgastzelle besteht aus einem Magnesiumblech- oder -gußstück, die am Befestigungsort der Fußhebelbaugruppe mittels der 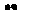 tailored blank"-Technik, 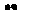 advanced tailored blank"-Technik, Patchwork- oder Sandwichtechnik lokal verstärkt ist.

## Beschreibung

Die Erfindung betrifft eine Stirnwand einer Fahrgastzelle in einem Krafffahrzeug, an welcher fahrgastseitig eine Fußhebelbaugruppe befestigbar ist.

Stirnwände dieser Art erstrecken sich in der Regel über den größten Teil der Fahrzeugbreite im Bereich des vorderen Fußraums der Fahrgastzelle und trennen die Fahrgastzelle vom Motorraum. Die Stirnwände dienen weiterhin zur Befestigung einer Fußhebelbaugruppe, welche das Bremspedal umfaßt. Da insbesondere bei Notbremsungen häufig große Kräfte auf das Bremspedal und damit auf die Stirnwand aufgebracht werden, muß diese zur Vermeidung einer unerwünschten Verformung oder Beschädigung ausreichend steif ausgebildet werden. Die erforderliche Steifigkeit könnte zwar auf einfache Weise dadurch erreicht werden, daß die Stirnwand aus einem entsprechend dickwandigen Blech gefertigt wird. Einer Erhöhung der Blechdicke steht jedoch das weitere Erfordernis eines möglichst geringen Gewichtes entgegen. Dieser Aspekt ist bei Stirnwänden deshalb von besonderer Bedeutung, da es sich um ein relativ großflächiges Bauteil handelt, so daß bereits eine geringfügige Erhöhung der Blechdicke eine beträchtliche Gewichtszunahme bedeuten würde.

Aus der EP 0 672 576 B1 ist bereits eine Stirnwand der eingangs genannten Art bekannt, die aus einem tiefgezogenen Blechpreßteil mit im Blech integrierter Verstärkung für die höher belasteten Partien, z.B. die Pedalaufnahme und die Lenksäulenhalterung, besteht. Das dortige Blechpreßteil wird in einem Spritzgußwerkzeug mit einem thermoplastischen Kunststoff umspritzt, wobei filirane Strukturen für Versteifungen und Aufnahmen für Zubehörteile mittels des Kunststoffs angebracht werden. Die dort beschriebene Stirnwand ist jedoch hinsichtlich der beiden Forderungen der Steifigkeit einerseits und des geringen Gewichts andererseits noch nicht optimal.

Weiterhin ist es aus der DE 195 24 157 A1 bereits bekannt, eine Stirnwand aus Magnesium zu fertigen, um den Vorteil des geringeren spezifischen Gewichts von Magnesium im Vergleich zu Stahl auszunutzen.

Der Erfindung liegt die Aufgabe zugrunde, eine Stirnwand der eingangs genannten Art zu schaffen, die bei möglichst geringem Gewicht eine möglichst hohe Steifigkeit aufweist. Weiterhin sollte die Eigenfrequenz der Stirnwand möglichst hoch liegen, um unerwünschte Dröhngeräusche zu vermeiden.

Diese Aufgabe wird erfindungsgemäß durch die Merkmale der Ansprüche 1 und 4 gelöst. Vorteilhafte Ausführungsformen der Erfindung sind in den weiteren Ansprüchen beschrieben.

Gemäß Anspruch 1 besteht die erfindungsgemäße Stirnwand aus einem Magnesiumblech- oder -gußstück, das aus mindestens zwei stirnseitig in 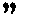 tailored blank"-Technik, d.h. mit einer linearen Trennlinie, oder in 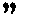 advanced tailored blank"-Technik, d.h. mit nichtlinearer Trennlinie, zusammengeschweißten Stirnwandteilen besteht, wobei das im Bereich des Befestigungsortes der Fußhebelbaugruppe angeordnete Stirnwandteil eine größere Steifigkeit als das angrenzende Stirnbandteil aufweist.

Bei der 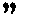 tailored blank"-Technik handelt es sich um eine Blechverarbeitungstechnik, bei der für ein bestimmtes Bauteil mehrere nebeneinanderliegende Blechteile unterschiedlicher Dicke und/oder unterschiedlicher Materialeigenschaften stirnseitig zusammengeschweißt werden. Während bei der 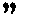 tailored blank"-Technik die Trennlinie linear ist, wobei zwei Bleche auf einfach Weise nebeneinandergelegt und zusammengeschweißt werden können, können mit der 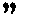 advanced tailored blank"-Technik nichtlineare Trennlinien realisiert werden, wobei komplexe Konturen ausgeschnitten und zusammengeschweißt werden. Insbesondere für die 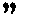 advanced tailored blank"-Technik ist somit ein puzzleartiges Zusammenfügen verschiedener Blechteile charakteristisch.

Die erfindungsgemäße Stirnwand gemäß Anspruch 1 zeichnet sich somit dadurch aus, daß im Bereich des Befestigungsortes der Fußhebelbaugruppe, d.h. in demjenigen Bereich, in dem die Kräfte der Fußhebelbaugruppe, insbesondere des Bremspedals, eingeleitet werden, ein Stirnwandteil vorgesehen ist, das eine größere Steifigkeit als die anderen Bereich der Stirnwand aufweist. Hiermit ist es möglich, gezielt und lokal begrenzt nur denjenigen Bereich der Stirnwand entsprechend steif und damit auch mit einem entsprechend höheren Gewicht auszuführen, in dem die maximalen Kräfte vom Fußhebelwerk eingeleitet werden. Die übrigen, weniger belasteten Bereiche der Stirnwand können dagegen entsprechend dünn und damit mit geringem Gewicht ausgebildet werden.

Die Erhöhung der Steifigkeit in den hoch belasteten Zonen kann beispielsweise durch eine Erhöhung der Blechdicke oder durch Einsetzen eines Stirnwandteils höherer Festigkeit erreicht werden.

Die Ausführungsform gemäß Anspruch 2 zeichnet sich durch eine einfache Fertigung und geringe Kosten aus. Hierbei ist es vorteilhaft, wenn die annähernd vertikale Trennlinie auf der Beifahrerseite der Stirnwand direkt neben den mittig angeordneten Stirnwanddurchlässen, die für Heizungs- und Lüftungskanäle vorgesehen sind, angeordnet wird.

Eine besonders hohe Gewichtsreduzierung bei gleichzeitig hoher Steifigkeit kann durch die Ausführungsform gemäß Anspruch 3 erreicht werden, die in 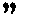 advanced tailored blank"-Technik hergestellt wird. Bei dieser Ausführungsform wird das Stirnwandteil mit erhöhter Steifigkeit und höherem Gewicht möglichst klein gehalten und nur im Bereich der maximalen Spannungen eingesetzt.

Gemäß Anspruch 4 besteht die erfindungsgemäße Stirnwand aus einem Magnesiumblech- oder -gußstück, das lokal im Bereich des Befestigungsortes der Fußhebelbaugruppe ein auf das Magnesiumblech- oder -gußstück in Patchwork- oder Sandwichtechnik aufgesetztes Versteifungselement aufweist.

Bei dieser Lösung besteht die Stirnwand somit im Bereich der maximalen Spannungen aus mehreren Schichten, da das Versteifungselement nicht - wie vorstehend beschrieben - in das Magnesiumblech- oder -gußstück eingesetzt, sondern auf dieses aufgesetzt wird. Maßgebend ist wiederum die lokale Begrenzung des Versteifungselements auf denjenigen Bereich der Stirnwand, in dem die größten Spannungen bei Betätigen der Fußhebelbaugruppe auftreten.

Während bei der Patchworktechnik das Versteifungselement vor dem Tiefziehen des Magnesiumblechstücks mit diesem verbunden und dann zusammen mit diesem in das Tiefziehwerkzeug eingesetzt wird, wird bei der Sandwichtechnik das Versteifungselement auf das fertig tiefgezogene oder geformte Magnesiumblech- bzw. -gußstück aufgesetzt und mit diesem verbunden.

Das Versteifungselement in der Form eines laschenförmigen Plattenteils gemäß Anspruch 5 bietet den Vorteil einer besonders hohen Gewichtsersparnis bei gleichzeitig hoher Steifigkeit der Stirnwand.

Das Versteifungselement in Form einer motorraumseitig angeordneten Versteifungsplatte bietet den Vorteil einer einfachen und kostengünstigen Herstellung.

Eine vorteilhafte Ausführungsform zeichnet sich dadurch aus, daß das Versteifungselement mittels Strukturschaum mit dem Magnesiumblech- oder -gußstück verbunden ist. Das Versteifungselement wird somit mittels des Strukturschaums auf das Magnesiumblech- oder -gußstück aufgeklebt, wobei durch hindurchgeführte Metallhülsen verhindert werden kann, daß sich der Strukturschaum zusammendrückt, wenn die Versteifungsplatte beim Festschrauben des Hauptbremszylinders gegen das Magnesiumblech- oder -gußstück gepreßt wird.

Neben einer hohen Steifigkeit bei gleichzeitiger Gewichtsreduzierung bietet die erfindungsgemäße Stirnwand den weiteren Vorteil, daß die Eigenfrequenz der Stirnwand relativ hoch liegt, so daß unerwünschte Dröhngeräusche verringert oder vermieden werden.

Die Erfindung wird nachfolgend anhand der Zeichnungen beispielshaft näher erläutert. In diesen zeigen:
- Figur 1 :: Eine perspektivische Ansicht des vorderen Teils einer Fahrgastzelle mit eingebauter Stirnwand gemäß der Erfindung, die in 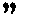 advanced tailored blank"-Technik verstärkt ist,
- Figur 2 :: die Stirnwand von Figur 1 in Einzeldarstellung,
- Figur 3 :: eine zweite Ausführungsform der erfindungsgemäßen Stirnwand in 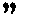 tailored blank"-Technik, und
- Figur 4 :: eine dritte Ausführungsform der erfindungsgemäßen Stirnwand in Patchwork- oder Sandwichtechnik.

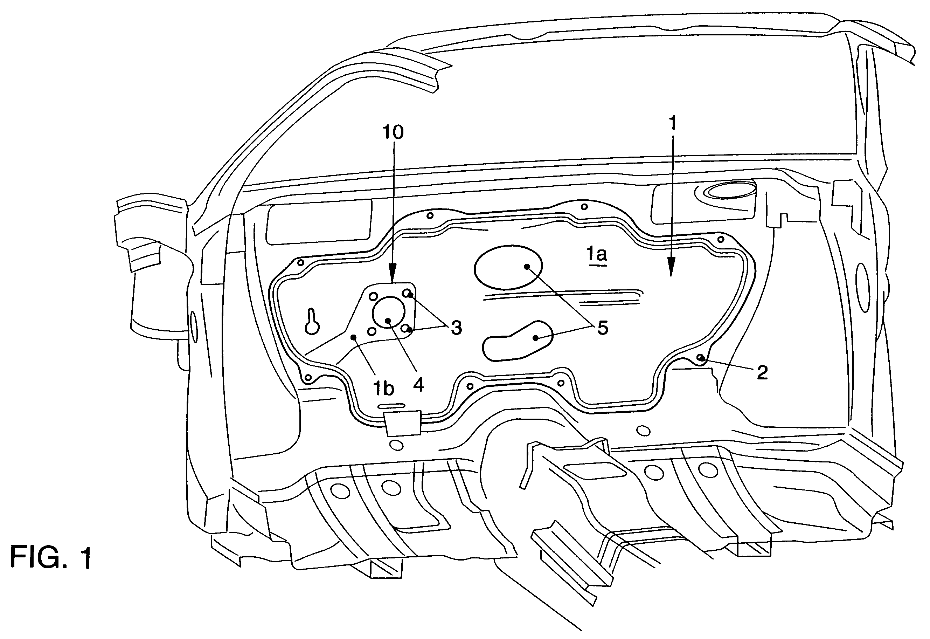

Figur 1 zeigt eine in eine Rohkarosserie eingesetzte Stirnwand 1 von der Seite der Fahrgastzelle her. Die Stirnwand 1 ist wannenförmig ausgebildet und schließt den größten Teil des vorderen Fußraums der Fahrgastzelle zum Motorraum hin ab. Weiterhin besteht die Stirnwand 1 aus einem Magnesiumblech- oder -gußteil, das in den Randbereichen mit der umgebenden Rohkarosserie verschraubt und/oder verklebt ist. Im gezeigten Ausführungsbeispiel sind in den Randbereichen insgesamt acht randseitige Befestigungslöcher 2 vorgesehen, die zum Verschrauben der Stirnwand 1 an der Rohkarosserie dienen.

Auf der Seite des Fahrers weist die Stirnwand 1 vier Befestigungslöcher 3 auf, die regelmäßig um eine Durchgangsöffnung 4 herum angeordnet sind. Die Befestigungslöcher 3 dienen zur Aufnahme von Gewindestiften, die sowohl fahrgastseitig als auch motorraumseitig über die Stirnwand 1 hinausstehen. Fahrgastseitig wird an diesen Gewindestiften eine nicht dargestellte Fußhebelbaugruppe mit einem Bremspedal befestigt, während motorraumseitig ein nicht dargestellter Hauptbremszylinder an denselben Gewindestiften festgelegt wird. Die Durchgangsöffnung 4 dient zum Hindurchführen eines nicht dargestellten Betätigungselementes des Hauptbremszylinders, so daß dieser über das Bremspedal betätigt werden kann.

Mittige Durchgangsöffnungen 5 in der Stirnwand 1 dienen zum Hindurchführen von Kühl- und Warmluftkanälen.

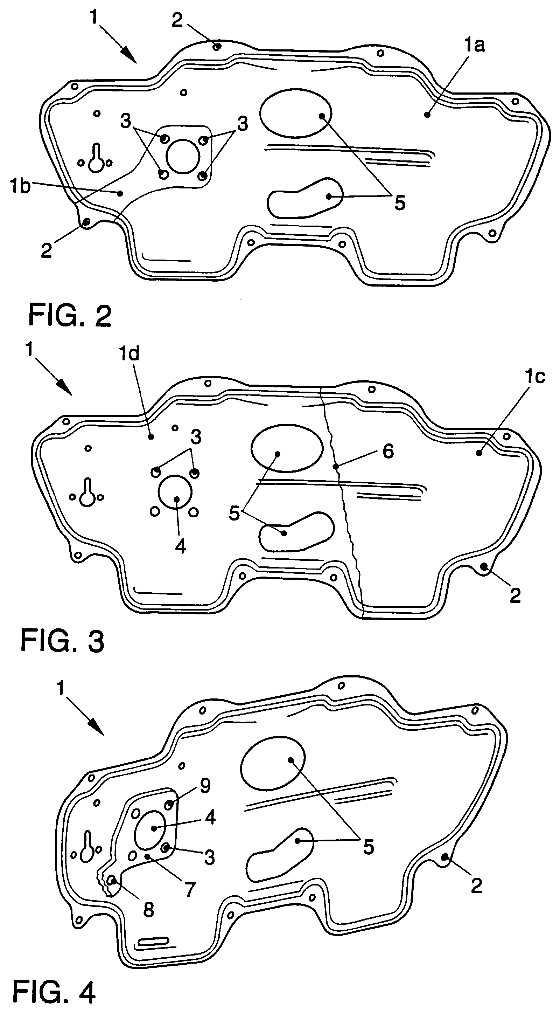

Bei der in den Figuren 1 und 2 dargestellten Ausführungsform besteht die Stirnwand 1 aus zwei Stirnwandteilen 1a und 1b unterschiedlicher Wandstärken, die in 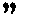 advanced tailored blank"-Technik puzzleartig aneinandergefügt und an ihren Stirnseiten zusammengeschweißt sind. Die Stirnwand 1a besteht aus einem relativ dünnwandigen Magnesiumblech- oder -gußteil mit einer Materialstärke von 0,6 bis 1,5 mm, insbesondere von 0,9 mm. Dieses Stirnwandteil 1a nimmt den weitaus größten Teil der Stirnwandfläche ein.

Das Stirnwandteil 1b weist dagegen eine wesentlich größere Wandstärke, beispielsweise 2,5 bis 4,0 mm, insbesondere 3,2 mm auf. Dieses Stirnwandteil 1b ist laschenartig ausgebildet und ist im Bereich der Befestigungslöcher 3 und der Durchgangsöffnung 4 angeordnet, d.h. das Stirnwandteil 1b weist die Befestigungslöcher 3 und die Durchgangsöffnung 4 auf. In diesem Bereich ist das Stirnwandteil 1b im wesentlichen quadratisch ausgebildet. Von diesem quadratischen Abschnitt des Stirnwandteils 1b erstreckt sich ein länglicher, schmälerer Abschnitt schräg nach links unten, d.h. zum naheliegenden Randbereich der Stirnwand 1, wobei im Bereich des außenliegenden Endes des Stirnwandteils 1b eines der wandseitigen Befestigungslöcher 2 der Stirnwand 1 vorgesehen ist. Das dickere Stirnwandteil 1b umschließt aufgrund einer derartigen Formgebung genau denjenigen Bereich, in dem die größten Spannungen in der Stirnwand auftreten, wenn das Bremspedal gedrückt wird. Die Trennlinie zwischen dem dünneren Stirnwandteil 1a und dem dickeren Stirnwandteil 1b ist mit 10 bezeichnet.

Figur 3 zeigt eine alternative Ausführungsform der erfindungsgemäßen Stirnwand, die in 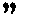 tailored blank"-Technik hergestellt wird. Diese Stirnwand 1 besteht aus zwei Stirnwandteilen 1c, 1d unterschiedlicher Wanddicke, die längs einer annähernd vertikalen Trennlinie 6 miteinander verbunden sind. Die Trennlinie 6 verläuft in der beifahrerseitigen Hälfte der Stirnwand 1 in unmittelbarer Nähe der Durchgangsöffnungen 5 für die Kühl- und Warmluftkanäle.

Während das dünnwandigere Stirnwandteil 1c eine Wanddicke von beispielsweise 0,5 bis 1,0, insbesondere 0,7 mm aufweist, beträgt die Wanddicke des dickwandigeren Stirnwandteils 1d beispielsweise 1,0 bis 2,0, insbesondere 1,5 mm. Maßgebend ist, daß der Befestigungsort für die Fußhebelbaugruppe, d.h. die Befestigungslöcher 3, wiederum im Bereich der dickwandigen Stirnwand 1d liegen.

Figur 4 zeigt eine alternative Ausführungsform der erfindungsgemäßen Stirnwand 1, die in Patchwork- oder Sandwichtechnik hergestellt wird. Bei dieser Ausführungsform ist auf das Magnesiumblech- oder -gußstück im Bereich des Befestigungsortes der Fußhebelbaugruppe fahrgastseitig ein Versteifungselement 7 in der Form eines laschenförmigen Plattenteils aufgebracht, so daß in diesem Bereich eine zweischichtige Verbundstirnwand geschaffen wird. Das Versteifungselement 7 weist eine ähnliche Form wie das in den Figuren 1 und 2 gezeigte dickwandigere Stirnwandteil 1b auf, wobei sich der nach links unten verlaufende schmälere Längsabschnitt jedoch nicht bis zum Randbereich der Stirnwand 1 erstreckt, sondern weiter innen, beispielsweise mittels einer Punktschweißung 8, am Magnesiumblech- oder -gußstück befestigt ist.

Zweckmäßigerweise wird das Versteifungselement 7 mittels eines Strukturschaums vollflächig auf das Magnesiumblech- oder -gußstück aufgeklebt.

Bei dieser Ausführungsform kann die Wanddicke des Magnesiumblech- oder -gußstücks und diejenige des Versteifungselements 7 beispielsweise jeweils zwischen 0,5 und 1,5 mm betragen.

Alternativ zu dem in Figur 4 dargestellten Ausführungsbeispiel ist es auch möglich, motorraumseitig im Bereich des Befestigungsortes der Fußhebelbaugruppe ein Versteifungselement am Magnesiumblech- oder -gußstück, beispielsweise mittels Strukturschaum, festzulegen, das dem in Figur 4 gezeigten Versteifungselement 7 entspricht oder aus einer Versteifungsplatte besteht, deren Form zweckmäßigerweise derjenigen der Befestigungsplatte der Fußhebelbaugruppe entspricht.

Um zu verhindern, daß sich der Strukturschaum zusammendrückt, wenn das Versteifungselement 7 gegen das Magnesiumblech- oder -gußstück gepreßt wird, können in die Befestigungslöcher 3 Stahlhülsen 9 eingeführt werden, welche die Druckkräfte quer zur Stirnwand 1, d.h. in Längsrichtung des Fahrzeugs, aufnehmen.

## Patentansprüche

1. Stirnwand einer Fahrgastzelle in einem Kraftfahrzeug, an welcher fahrgastseitig eine Fußhebelbaugruppe befestigbar ist, **dadurch gekennzeichnet**, daß die Stirnwand (1) aus einem Magnesiumblech- oder -gußstück besteht, das aus mindestens zwei, stirnseitig in 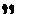 tailored blank"-Technik, d.h. mit einer linearen Trennlinie (6), oder in 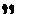 advanced tailored blank"-Technik, d.h. mit nichtlinearer Trennlinie (10), zusammengeschweißten Stirnwandteilen (1a, 1b, 1c, 1d) besteht, wobei das im Bereich des Befestigungsortes der Fußhebelbaugruppe angeordnete Stirnwandteil (1b, 1d) eine größere Steifigkeit als das angrenzende Stirnwandteil (1a, 1c) aufweist.

2. Stirnwand nach Anspruch 1, **dadurch gekennzeichnet**, daß das Magnesiumblech- oder -gußstück aus zwei Stirnwandteilen (1c, 1d) besteht, die eine lineare, zumindest annähernd vertikale Trennlinie (6) aufweisen, die seitlich neben dem Befestigungsort der Fußhebelbaugruppe auf der beifahrernahen Seite der Stirnwand (1) angeordnet ist.

3. Stirnwand nach Anspruch 1, **dadurch gekennzeichnet**, daß im Bereich des Befestigungsortes der Fußhebelbaugruppe ein laschenförmiges Stirnwandteil (1b) größerer Steifigkeit eingesetzt ist, das sich vom Befestigungsort der Fußhebelbaugruppe zum naheliegenden Seitenrand der Stirnwand (1) in demjenigen Bereich erstreckt, der beim Betätigen des Fußbremshebels der höchsten Belastung ausgesetzt ist.

4. Stirnwand einer Fahrgastzelle in einem Kraftfahrzeug, an welcher fahrgastseitig eine Fußhebelbaugruppe befestigbar ist, **dadurch gekennzeichnet**, daß die Stirnwand (1) aus einem Magnesiumblech- oder -gußstück besteht, das lokal im Bereich des Befestigungsortes der Fußhebelbaugruppe ein auf das Magnesiumblech- oder -gußstück in Patchwork- oder Sandwichtechnik aufgesetztes Versteifungselement (7) aufweist.

5. Stirnwand nach Anspruch 4, **dadurch gekennzeichnet**, daß das Versteifungselement (7) aus einem laschenförmigen Plattenteil besteht, das sich vom Befestigungsort der Fußhebelbaugruppe zum naheliegenden Seitenrand der Stirnwand (1) in demjenigen Bereich erstreckt, der beim Betätigen des Fußbremshebels der höchsten Belastung ausgesetzt ist.

6. Stirnwand nach Anspruch 4, **dadurch gekennzeichnet**, daß das Versteifungselement (7) aus einer Versteifungsplatte besteht, die im Bereich des Befestigungsortes der Fußhebelbaugruppe motorraumseitig an der Stirnwand (1) festgelegt ist.

7. Stirnwand nach einem der Ansprüche 4 bis 6, **dadurch gekennzeichnet**, daß das Versteifungselement (7) mittels Strukturschaum mit dem Magnesiumblech- oder -gußstück verbunden ist.

8. Stirnwand nach einem der vorhergehenden Ansprüche, **dadurch gekennzeichnet**, daß die Stirnwand (1) im Bereich des Befestigungsortes der Fußhebelbaugruppe eine Durchgangsöffnung (4) zum Durchtritt eines Betätigungselementes für einen Hauptbremszylinder aufweist, der motorraumseitig im Bereich des Befestigungsortes der Fußhebelbaugruppe an der Stirnwand (1) befestigt ist.

9. Stirnwand nach Anspruch 7, **dadurch gekennzeichnet**, daß der Befestigungsort der Fußhebelbaugruppe durch mehrere um die Durchgangsöffnung (4) herum angeordnete Befestigungslöcher (3) bestimmt ist, die zur Aufnahme von Befestigungselementen dienen.

10. Stirnwand nach Anspruch 9, **dadurch gekennzeichnet**, daß dieselben Befestigungselemente sowohl fahrgastseitig als auch motorraumseitig über die Stirnwand (1) vorstehen, wobei an den Befestigungselementen einerseits die Fußhebelbaugruppe und andererseits der Hauptbremszylinder befestigt sind.
